# EUROPEAN PATENT APPLICATION

(11) **EP 2 194 324 A2**
(43) Date of publication of application: **09.06.2010**
(21) Application number: 09011921.5
(22) Date of filing: 18.09.2009
(51) Int. Cl.: F23G 1/00, F23G 5/46

(54) **Movable integrated cremation device**

(30) Priority: 27.02.2009 KR 20090017195; 05.12.2008 KR 20080122980
(71) Applicant: Park, Jin-Shin, Gangnam-gu 135-270 Seoul (KR); Park, Kyung-Soon, Seocho-gu 137-070 Seoul (KR)
(72) Inventor: Park, Jin-Shin, Gangnam-gu 135-270 Seoul (KR); Park, Kyung-Soon, Seocho-gu 137-070 Seoul (KR)
(74) Representative: Jeck, Anton

(57) **Abstract**

Disclosed herein is a movable integrated cremation device. The device has a trailer which can be towed and relocated, an incinerator for burning a corpse, a cooling unit for cooling waste heat emitted from the incinerator, a dust collector for eliminating dust and offensive odor from the waste heat which is discharged, a waste heat discharge unit for discharging waste heat from which the dust and the offensive odors were removed, a gas supply unit for supplying fuel required for combustion to the incinerator, and an electricity supply unit for supplying electricity used to operate the components. The device can be towed using a vehicle, cool the high temperature waste heat generated during cremation, and remove dust and offensive odors from the waste heat before it is discharged.

## Description

### BACKGROUND OF THE INVENTION

### 1. Field of the Invention

The present invention relates generally to a cremation device for cremating a corpse and, more particularly, to a movable integrated cremation device, which can be towed using a vehicle, cools waste heat of high temperature generated during cremation, and eliminates dust and offensive odors from the waste heat, prior to discharging the waste heat to the outside.

### 2. Description of the Related Art

Generally, a corpse needs to be transferred to a designated crematorium to be cremated. However, in a special case where the corpse was infected by or was exposed to a contagious disease, the movement of the corpse is inevitably limited so as to prevent the epidemic from spreading.

In this case, the cremation of the corpse is delayed. Thus, a movable cremation device which is capable of directly cremating an infected corpse on the spot is required.

### SUMMARY OF THE INVENTION

Accordingly, the present invention has been made keeping in mind the above problems occurring in the prior art, and an object of the present invention is to provide a movable integrated cremation device, which can be relocated to the location of a corpse and obviates the necessity of directly installing a simple cremation device at the spot where the corpse is located, thus making it convenient to cremate the corpse and preventing environmental pollution resulting from waste heat, dust and offensive odors which are generated during cremation of the corpse.

In order to accomplish the above object, the present invention provides a movable integrated cremation device having at least one trailer which can be towed and relocated, an incinerator for burning a corpse, a cooling unit for cooling waste heat emitted from the incinerator, a dust collector for eliminating dust and offensive odors from the waste heat which is discharged, a waste heat discharge unit for discharging waste heat from which the dust and the offensive odors have been removed, a gas supply unit for supplying fuel required for combustion to the incinerator, and an electricity supply unit for supplying electricity used to operate the components.

According to the present invention, the trailer may be provided with a lift for pulling a corpse to the mouth of the incinerator. The cremation device may include two or more trailers. Furthermore, in the state of the above-mentioned components being separately mounted on corresponding trailers, the trailers are connected to each other before being operated.

The incinerator may include at least one burner for burning a corpse, and a first blower for supplying combustion air during cremation.

The cooling unit may include an air-cooling unit which primarily cools waste heat generated from the incinerator, and a water-cooling unit which secondarily cools the waste heat cooled by the air-cooling unit. The air-cooling unit may be provided with a second blower which supplies cold air to perform a heat exchange process. The water-cooling unit may be provided with a water tank for storing water therein, and a pump for feeding water from the water tank to the water-cooling unit.

The dust collector may include a pulse dust collector for eliminating dust from the waste heat, and an electric dust collector for eliminating offensive odors from the waste heat.

The waste heat discharge unit may include a chimney for discharging the waste heat, a third blower for forcibly discharging the waste heat through the chimney, and a muffler which is installed to an outlet side of the third blower so as to decrease noise.

The movable integrated cremation device according to the present invention is advantageous in that respective components are mounted on movable trailers, so that the device can be rapidly towed using a general access road to a spot where a corpse is located, thus allowing the corpse to be easily handled.

The movable integrated cremation device according to the present invention is advantageous in that waste heat generated during the cremation of a corpse is cooled and thereafter dust and offensive odors are eliminated from the waste heat before it is discharged, thus preventing the surrounding environment from being contaminated, in addition to enabling the safe use of the device.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a perspective view illustrating a movable cremation device according to the present invention;
FIG. 2 is a plan view illustrating the movable cremation device according to the present invention;
FIG. 3 is a left side view illustrating the movable cremation device according to the present invention;
FIG. 4 is a right side view illustrating the movable cremation device according to the present invention; and
FIG. 5 is a view illustrating the operation of the lift of the movable cremation device according to the present invention.

### DESCRIPTION OF THE PREFERRED EMBODIMENTS

The preferred embodiment of the present invention will be described in detail with reference to the accompanying drawings.

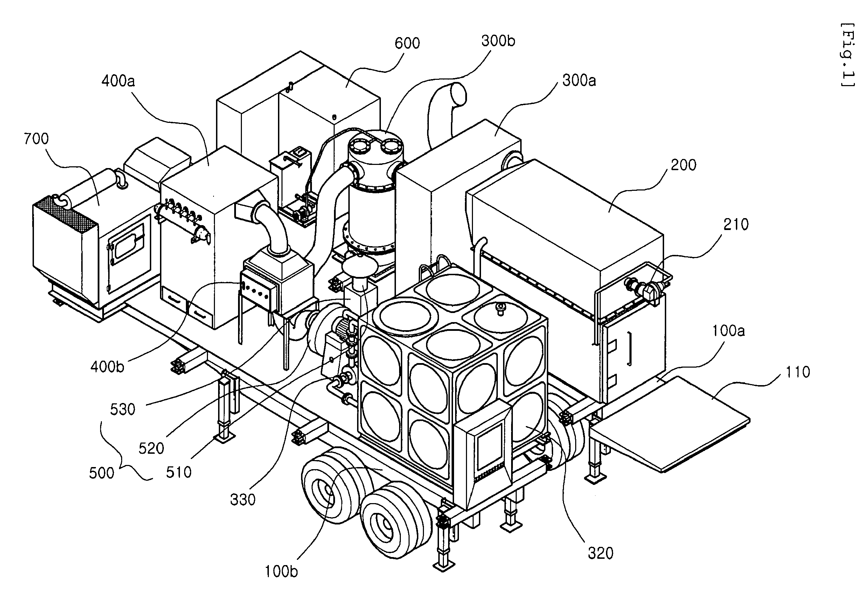

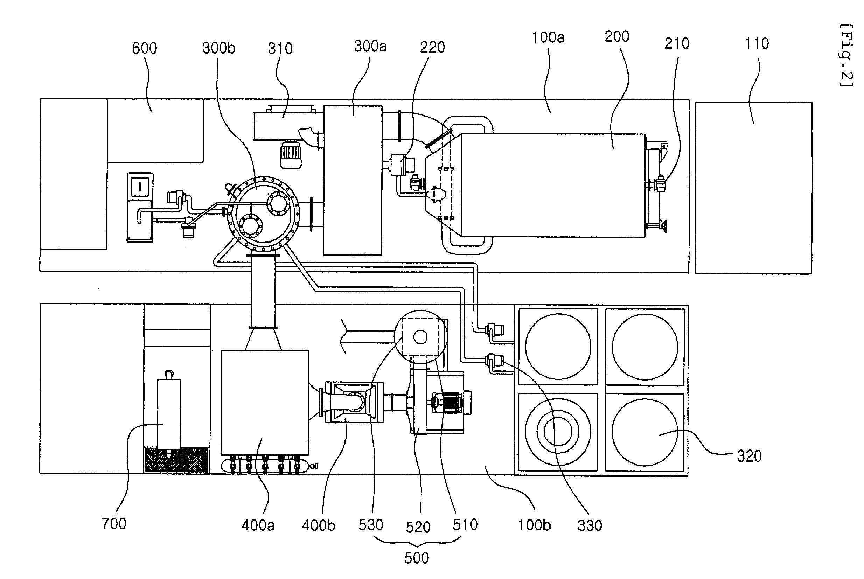

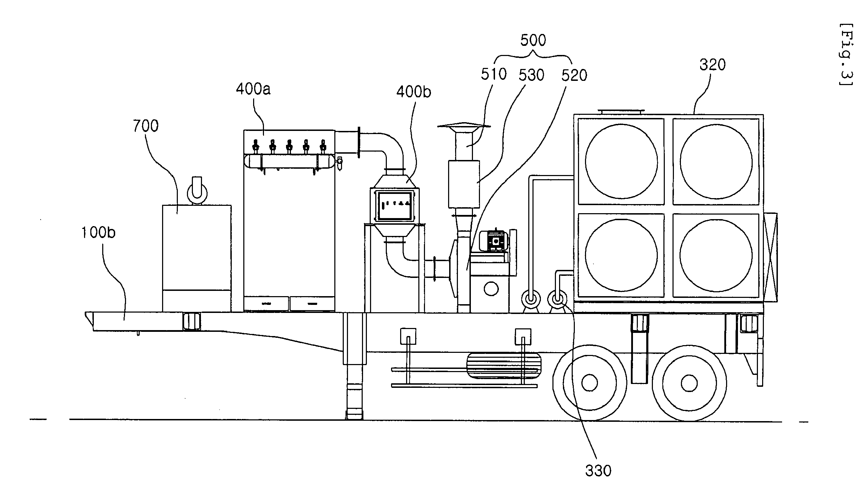

FIG. 1 is a perspective view illustrating a movable cremation device according to the present invention, FIG. 2 is a plan view illustrating the movable cremation device according to the present invention, and FIG. 3 is a left side view illustrating the movable cremation device according to the present invention.

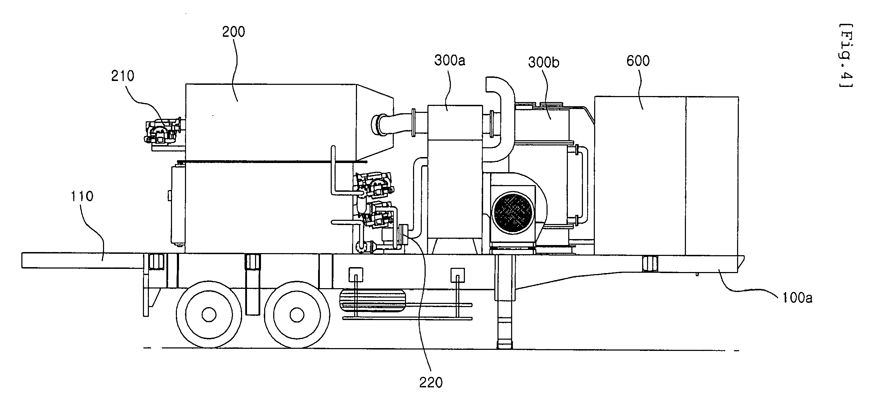

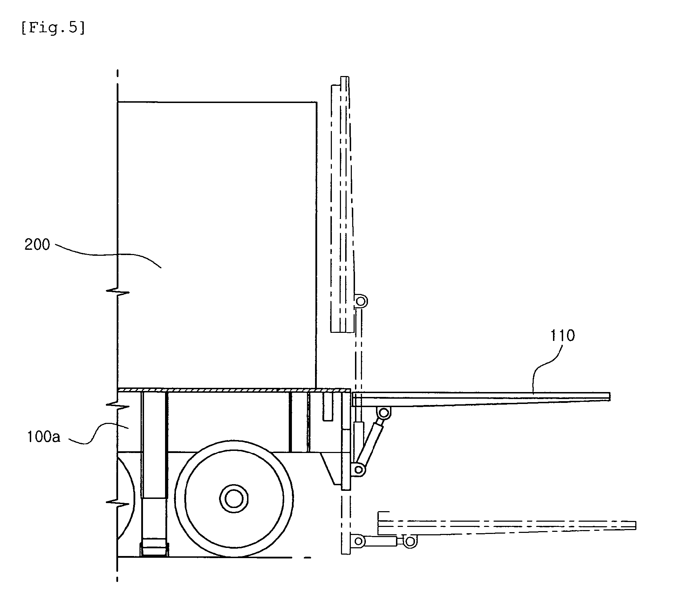

Further, FIG. 4 is a right side view illustrating the movable cremation device according to the present invention, and FIG. 5 is a view illustrating the operation of the lift of the movable cremation device according to the present invention.

As shown in FIGS. 1 to 5, the movable cremation device of the present invention includes trailers 100a and 100b which may be towed to a new location, an incinerator 200 which burns a corpse, cooling units 300a and 300b which cool waste heat emitted from the incinerator 200, dust collectors 400a and 400b which eliminate dust and offensive odors from the emitted waste heat, a waste heat discharge unit 500 which discharges the waste heat after the dust and offensive odors have been eliminated from the waste heat, a gas supply unit 600 which supplies fuel required for combustion in the incinerator 200, and an electricity supply unit 700 which supplies electricity used to operate the above components.

According to this invention, the trailers 100a and 100b may be connected to a towing vehicle such as a truck or a combine so as to be towed, and may stop independently when the trailers 100a and 100b are disconnected from the towing vehicle. The trailers 100a and 100b allow the cremation components mounted thereon to be conveniently transferred and set up.

The trailers 100a and 100b are provided with a lift 110 for pulling a corpse to a mouth of the incinerator 200. The lift 110 is constructed so that it is folded when the device is moved and is unfolded when the device is being used.

As shown in the drawings, the device is provided with two or more trailers to allow the components to be separately mounted on the trailers 100a and 100b. In this case, after the trailers 100a and 100b are stopped side by side on the spot at which a corpse is located, the components are connected to each other to be operated.

Here, the lift 110 may be installed to only the trailer 100a having the incinerator 200.

According to this invention, the incinerator 200 functions to burn a corpse. As shown in the drawings, the incinerator 200 is provided with at least one burner 210 for burning a corpse and a first blower 220 for supplying combustion air during incineration.

The incinerator 200 is heated until its internal temperature exceeds 850°C. Thus, the inner surface of the incinerator 200 is finished using an insulating material and firebrick so as to protect the incinerator 200 and prevent heat from being radiated to the outside.

In the present invention, each cooling unit 300a or 300b functions to cool waste heat of high temperature, which is discharged after a corpse is incinerated by the incinerator 200. Each cooling unit 300a or 300b is constructed to reduce the temperature of the waste heat from 850°C or more to 200°C or less.

As shown in the drawings, the cooling units 300a and 300b preferably include an air-cooling unit 300a and a water-cooling unit 300b so as to smoothly perform the cooling operation in stages. The air-cooling unit 300a primarily cools waste heat generated from the incinerator 200 to a temperature of 600°C or less. The water-cooling unit 300b secondarily cools waste heat cooled by the air-cooling unit 300a to a temperature of 200°C or less.

The air-cooling unit 300a reduces the load put on the water-cooling unit 300b, thus ensuring reliable operation.

The air-cooling unit 300a is provided with a second blower 310 which supplies cold air to perform a heat exchange process. The water-cooling unit 300b is provided with a water tank 320 which stores water therein, and a pump 330 which feeds water from the water tank 320 to the water-cooling unit 300b.

The water tank 320 of the water-cooling unit 300b is constructed to store at least 8 tons of water, thus ensuring the smooth supply of cooling water.

According to the present invention, preferably, one end of the first blower 220 is connected to the incinerator 200, while the other end is connected to the air-cooling unit 300a, thus supplying hot air, which goes through a heat exchange process in the air-cooling unit 300a, to the incinerator 200 to serve as combustion air.

That is, external cold air is introduced into the air-cooling unit 300a by the second blower 310, so that the cold air performs the heat exchange process and becomes converted into hot air. The hot air is supplied into the incinerator 200 by the first blower 220, thus preventing a lowering of the internal temperature of the incinerator 200.

The incinerator 200 is heated so that its internal temperature exceeds 850°C. If external cold air is fed into the incinerator 200, more burners are required to burn a corpse.

According to this invention, the dust collectors 400a and 400b function to eliminate dust and offensive odors from waste heat which is discharged from the cooling units 300a and 300b. As shown in the drawings, the dust collectors 400a and 400b include a pulse dust collector 400a for primarily eliminating dust from the waste heat, and an electric dust collector 400b for secondarily eliminating offensive odors from the waste heat, thus eliminating the dust and odors in stages.

The pulse dust collector 400a forces the introduced waste heat to pass through a bag filter, whereby the bag filter captures dust. When a large quantity of dust is caught by the bag filter, so that it is difficult for waste heat to pass, the dust is shaken away from the bag filter by pulses of air pressure. Thereby, the pulse dust collector 400a can be used for a lengthy period of time.

When air is poorly ventilated because of it being a rainy season or low atmospheric pressure, the electric dust collector 400b eliminates peculiar odors generated from the cremation device. The electric dust collector 400b passes waste heat between metallic plates around which a magnetic field is formed, thus collecting fine dust and odor particles, which have passed through the bag filter, using electric force, and then getting rid of the fine dust and odor particles.

According to this invention, the waste heat discharge unit 500 serves to discharge waste heat from which dust and offensive odors were eliminated by passing the waste heat through the dust collectors 400a and 400b. The waste heat discharge unit 500 includes a chimney 510, a third blower 520 for forcibly discharging waste heat through the chimney 510, and a muffler 530 which is installed to the outlet side of the third blower 520 to decrease noise.

According to this invention, the gas supply unit 600 functions to supply fuel required for combustion to the incinerator 200. The gas supply unit 600 is usually connected to a gas tank.

A vaporizer having the capacity of 100kg or more and a pressure regulator of 100kg or more are connected to the gas supply unit 600, thus allowing gas to be reliably supplied.

According to the present invention, the electricity supply unit 700 functions to supply electricity which is used for operation of the incinerator 200, the cooling units 300a and 300b, the dust collectors 400a and 400b, and the waste heat discharge unit 500, and is constructed to have the power generating capacity of 50Kw or more.

In the movable integrated cremation device of this invention constructed as described above, the incinerator 200, the cooling units 300a and 300b and the gas supply unit 600 are provided on one trailer 100a equipped with the lift 110, while the water tank 320, the waste heat discharge unit 500, the dust collectors 400a and 400b and the electricity supply unit 700 are provided on the other trailer 100b. The trailers 100a and 100b on which the associated components are loaded are moved to the location of a corpse, are stopped side by side, and are connected to each other to be operated.

As described above, the present invention provides a movable integrated cremation device, in which respective components are loaded on corresponding movable trailers, thus allowing the device to be rapidly towed using general access roads to the location of a corpse, therefore making it easier to handle the corpse, and in which waste heat generated during the cremation of a corpse is cooled and then dust and offensive odors are eliminated from the waste heat before it is discharged, thus preventing the ambient environment from being contaminated, and enabling the safe use of the device.

Although the preferred embodiment of the present invention has been disclosed for illustrative purposes, those skilled in the art will appreciate that various modifications, additions and substitutions are possible, without departing from the scope and spirit of the invention as disclosed in the accompanying claims.

## Claims

1. A movable integrated cremation device having at least one trailer which can be towed and relocated; an incinerator for burning a corpse; a cooling unit for cooling waste heat emitted from the incinerator; a dust collector for eliminating dust and offensive odors from the waste heat which is discharged; a waste heat discharge unit for discharging waste heat from which the dust and the offensive odors have been removed; a gas supply unit for supplying fuel required for combustion to the incinerator; and an electricity supply unit for supplying electricity used to operate the components,
wherein the incinerator includes at least one burner for burning the corpse and a first blower for supplying air for the combustion of the corpse, and
the cooling unit includes an air-cooling unit which has a second blower for supplying cold air to perform a heat exchange process, thus primarily cooling the waste heat generated from the incinerator, and a water-cooling unit which has a water tank for storing water and a pump for feeding water from the water tank, thus secondarily cooling the waste heat cooled by the air-cooling unit,
wherein a first end of the first blower is connected to the incinerator, and a second end thereof is connected to the air-cooling unit, thus supplying air heated as a result of the heat exchange process of the air-cooling unit to be used as air for combustion taking place in the incinerator.

2. The movable integrated cremation device as set forth in claim 1, wherein the incinerator, the cooling unit and the gas supply unit are mounted on one trailer equipped with the lift for pulling the corpse, and the water tank of the cooling unit, the waste heat discharge unit, the dust collector and the electricity supply unit are mounted on another trailer, the trailers being moved to and stopped side by side at a location of the corpse and then connected to each other to be operated.
